Europäisches Patentamt

European Patent Office

Office européen des brevets

(19)

(11) **EP 1 681 800 A1**

(12) **DEMANDE DE BREVET EUROPEEN**

(43) Date de publication:
**19.07.2006 Bulletin 2006/29**

(51) Int Cl.:
*H04L 12/26* (2006.01)     *H04L 12/24* (2006.01)

(21) Numéro de dépôt: **06290110.3**

(22) Date de dépôt: **17.01.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **17.01.2005  FR 0550128**

(71) Demandeur: **Bouygues Telecom
92100 Boulogne Billancourt (FR)**

(72) Inventeurs:
• **De Buyer, Christian**
  **92130 Issy-Les-Moulineaux (FR)**
• **Chauvet, Fabrice**
  **92290 Chatenay-Malabry (FR)**
• **Nait-Abdallah, Rabie**
  **92100 Boulogne-Billancourt (FR)**

(74) Mandataire: **Breese Derambure Majerowicz
38, avenue de l'Opéra
75002 Paris (FR)**

(54) **Procédé de détection d'événements dans un réseau de télécommunications**

(57)     La présente invention se rapporte à un procédé de supervision d'un réseau de télécommunications ayant pour but la détection d'événements à partir d'équipements-sondes placés dans le réseau comprenant les étapes consistant à :

• spécifier un modèle ajusté sur un historique de données ;
• calibrer ledit modèle en mesurant les écarts entre le modèle et les données de l'historique ;
• construire un intervalle de confiance ;

• recueillir des données Dr ;
• appliquer ledit modèle auxdites données Dr ;
• détecter des incidents en observant les écarts entre les valeurs de Dr et l'estimation donnée par ledit modèle et en évaluant si les écarts appartiennent ou non audit intervalle de confiance ; et
• filtrer et trier lesdits incidents détectés.

La présente invention se rapporte également à un système de supervision d'un réseau de télécommunications comportant au moins un équipement-sonde et un serveur de traitement.

Figure 4

EP 1 681 800 A1

**Description**

La présente invention se rapporte au domaine des réseaux de télécommunications.

La présente invention se rapporte plus particulièrement à l'analyse et à la supervision d'un réseau de télécommunications fixe ou mobile.

L'art antérieur connaît déjà de nombreux procédés et systèmes de supervision et d'analyse de réseaux de communication.

On connaît dans l'état de la technique la demande PCT WO 02/069569 (France Telecom) qui porte sur la supervision et le diagnostic du fonctionnement d'un système dynamique. L'invention de cette demande PCT se rapporte à l'utilisation de chroniques dépendant d'événements, comme des alarmes, et à l'utilisation de trajectoires de réseau de Petri pour la supervision de systèmes dynamiques tels que des réseaux de télécommunications.

L'art antérieur connaît également, par la demande de brevet américain US 2004/138858 (Stephen Carley) *"System and method for providing composite variance analysis for network operation",* un système et un procédé consistant à recueillir des mesures liées à la métrologie des performances de réseaux, et à calculer et fournir automatiquement une analyse composite de la variance de ladite métrologie. Ledit système et ledit procédé peuvent ensuite faire appel à un historique des statistiques liées aux données de performances, afin d'avertir un utilisateur lorsque les performances de services réseau dépassent les limites acceptables de tolérance ou de maîtrise. Cette technique permet de révéler tout écart subtil par rapport à la tolérance de mesures acceptée, lequel peut, à son tour, être catégorisé en fonction de limites de maîtrise fondées sur des seuils de déviation de référence définis.

Ce document ne divulgue pas l'utilisation d'un intervalle de confiance tel qu'il est défini dans la présente demande de brevet. De plus, le document D1 ne concerne pas un procédé de détection d'événements mais un système de comparaison. Enfin, ce document n'enseigne pas l'utilisation d'un indice d'anormalité et de sévérité.

L'art antérieur connaît également, par la demande de brevet européen EP 1 065 827 (Lucent Technologies) *"Method and apparatus for detecting service anomalies in transaction-oriented networks,* un procédé et un dispositif pour détecter des anomalies de services dans des réseaux de transaction. Dans un réseau de transaction qui supporte des transactions électroniques de courte durée dans des classes de services multiples entre des terminaux d'entrée et des processeurs hôtes, tels que des achats de carte de crédit, un détecteur d'anomalie de réseau observe le réseau pour déterminer une faille potentielle sur ou en dehors du réseau avant qu'une panne réelle de réseau n'intervienne. Le détecteur d'anomalie de réseau est fourni avec des données de transaction courantes pour des transactions en cours, les données pour chaque transaction comprenant la classe de service de la transaction, le moment de départ de la transaction et la durée de la transaction. Les données de transaction courante sont converties en une intensité de trafic, qui fournit une mesure temporelle du trafic sur le réseau dans chaque intervalle prédéterminé pour chaque classe de service. Pour chaque classe de service, cet intervalle est traité par le détecteur comme une fonction de la médiane des durées de transactions ayant la même classe de service à partir des données de transaction de sorte qu'on attendrait qu'un large pourcentage de transactions ait statistiquement une durée inférieure à un intervalle. Cet intervalle est également utilisé pour convertir des données historiques de transactions pour chaque classe en seuils temporels d'intensité de trafic supérieurs et inférieurs. Si l'intensité de trafic générée à partir des données courantes dépasse le seuil supérieur ou tombe en dessous du seuil inférieur pendant plus qu'un temps prédéterminé, une alarme est mise en route pour indiquer une anomalie. Des actions correctives peuvent alors être prises pour enlever la condition anormale. Périodiquement, les données historiques utilisées pour générer les seuils supérieurs et inférieurs sont mis à jour avec plus de données de transaction récentes de sorte que les seuils suivent de plus près les tendances de données courantes.

Cette demande de brevet européen concerne le domaine des transactions et non le domaine des réseaux de télécommunications. De plus, ce document ne divulgue pas l'utilisation d'un intervalle de confiance tel qu'il est défini dans la présente demande de brevet. Enfin, ce document n'enseigne pas l'utilisation d'un indice d'anormalité et de sévérité.

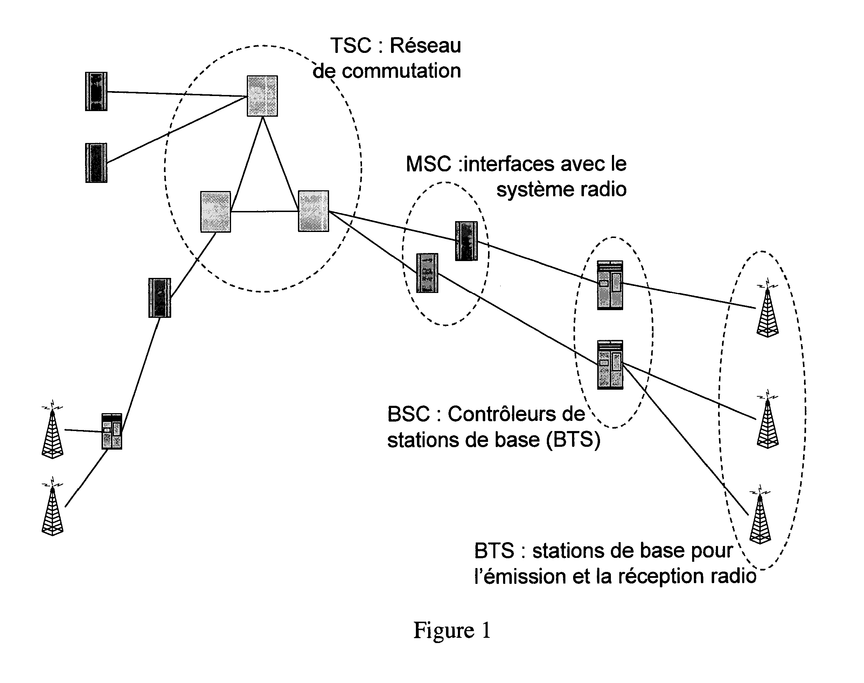

La figure 1 illustre l'architecture d'un réseau de téléphonie mobile. Le réseau garantit l'acheminement des communications des clients quelle que soit leur localisation dans les zones couvertes.

Les réseaux de téléphonie sont en règle générale interconnectés, ceci dans le but de permettre des communications entre correspondants n'appartenant pas nécessairement à un même réseau. En effet, un client doit être en mesure de communiquer avec des correspondants appartenant à d'autres opérateurs fixe ou mobile. Il doit également être en mesure d'appeler et de recevoir des appels de correspondants se trouvant à l'étranger.

Compte tenu de cette connexité, l'opérateur souhaitant superviser sa qualité de service doit également tenir compte des autres réseaux par lesquels sont acheminées les conversations de ses clients. À cet effet, des sondes permettent de fournir des données telles que les volumes d'appels transitant par les réseaux externes ou les taux d'erreurs par exemple. Une des difficultés rencontrées en termes de supervision est que ces informations ne sont pas suffisantes pour une réactivité efficace. En effet, les alertes concernant les incidents ou dysfonctionnements survenant sur les réseaux externes ne sont généralement pas accessibles. Ainsi, si un opérateur donné subit une panne ou une dégradation de qualité, par exemple, l'information n'est généralement pas transmise aux autres opérateurs qui lui sont reliés.

Le problème technique objectif auquel répond la présente invention est celui consistant à offrir un moyen technique permettant de détecter automatiquement d'éventuels incidents survenant sur le réseau à partir d'informations provenant de sondes de mesure avec une précision et une efficacité accrues.

À cet effet, la présente invention concerne, dans son acception la plus générale, un procédé de supervision d'un réseau de télécommunications ayant pour but la détection d'événements à partir d'équipements-sondes placés dans le réseau comprenant les étapes consistant à :

- spécifier un modèle ajusté sur un historique de données ;
- calibrer ledit modèle en mesurant les écarts entre le modèle et les données de l'historique ;
- construire un intervalle de confiance ;
- recueillir des données Dr ;
- appliquer ledit modèle auxdites données Dr ;
- détecter des incidents en observant les écarts entre les valeurs de Dr et l'estimation donnée par ledit modèle et en évaluant si les écarts appartiennent ou non audit intervalle de confiance ; et
- filtrer et trier lesdits incidents détectés, en utilisant un indice d'anormalité et de sévérité.

Selon un premier mode de réalisation, lesdites données Dr représentent un nombre d'appels vers une destination donnée ou depuis une origine donnée en un temps donné.

Selon un second mode de réalisation, lesdites données Dr représentent des volumes d'appels.

Selon un troisième mode de réalisation, lesdites données Dr représentent des erreurs.

Selon un autre mode de mise en oeuvre, lesdites données Dr représentent des proportions d'appels réussis.

Selon une autre variante, lesdites données Dr représentent des nombres de tentatives d'appels.

Selon un autre mode de réalisation, lesdites données Dr représentent des données relatives à un transporteur donné.

Selon un autre mode de mise en oeuvre, lesdites données Dr représentent des durées moyennes d'appels ou des proportions d'appels courts ou longs.

Selon un autre mode de réalisation, lesdites données Dr représentent un indicateur assez régulier dont une variation soudaine peut permettre de mettre en évidence un dysfonctionnement technique.

De préférence, lesdites données Dr sont hiérarchisées, par exemple par pays ou par tranches de numéros.

Selon une variante particulière, le procédé comporte en outre une étape de consultation des incidents par un utilisateur au moyen d'une interface logicielle, notamment graphique.

Selon une autre variante particulière, le procédé comporte en outre une étape de régulation automatique du réseau.

La présente invention se rapporte également à un système de supervision d'un réseau de télécommunications comportant au moins un équipement-sonde et un serveur de traitement pour la mise en oeuvre du procédé.

On comprendra mieux l'invention à l'aide de la description, faite ci-après à titre purement explicatif, d'un mode de réalisation de l'invention, en référence aux figures annexées où :

- la figure 1 illustre l'architecture d'un réseau de téléphonie mobile selon la norme GSM ;
- la figure 2 est un schéma descriptif du mode de fonctionnement de la présente invention ;
- la figure 3 illustre un ajustement du modèle en fonction des mesures de l'historique ;
- la figure 4 représente la construction de l'intervalle de confiance et la détection d'un incident ; et
- la figure 5 illustre le lien entre les erreurs de détection et l'intervalle de confiance.

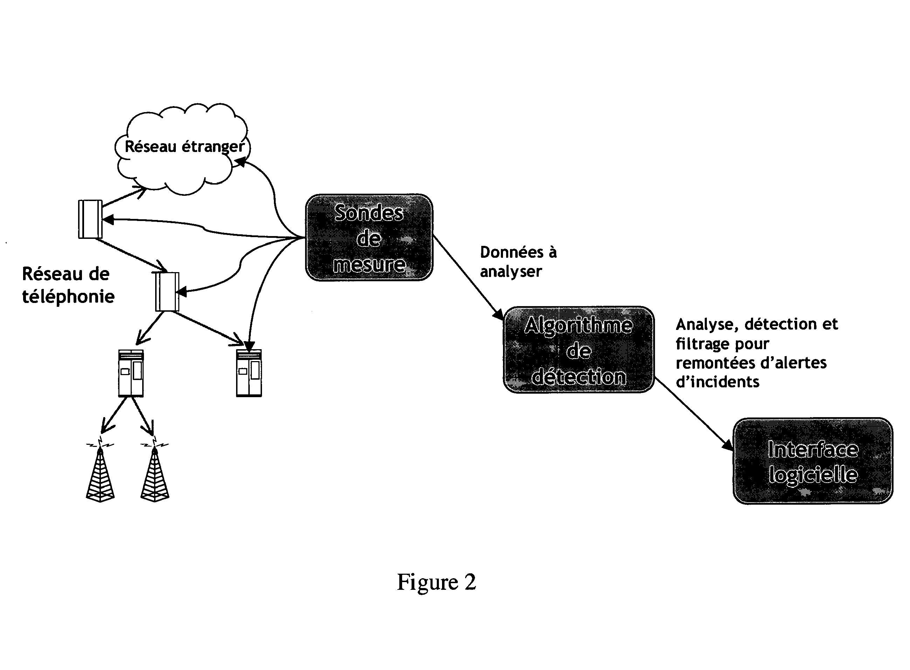

Le principe de l'invention est décrit figure 2. La première étape consiste à recueillir les nouvelles données fournies par les sondes et à les analyser en les confrontant aux historiques. L'algorithme de détection permet alors d'évaluer automatiquement le caractère "atypique" de ces données. Lorsqu'un incident est détecté, une alerte est générée. Elle est visualisable par le superviseur du réseau grâce à une interface logicielle. L'algorithme permet également de trier et filtrer les alertes en fonctions de critères d'importance définis par l'utilisateur.

Le fonctionnement de l'algorithme de détection se fait en 4 phases :

- Ajustement du modèle aux historiques ;
- Construction d'un intervalle de confiance ;
- Détection ;
- Filtrage et Tri.

**Phase 1 : Ajustement du modèle aux historiques**

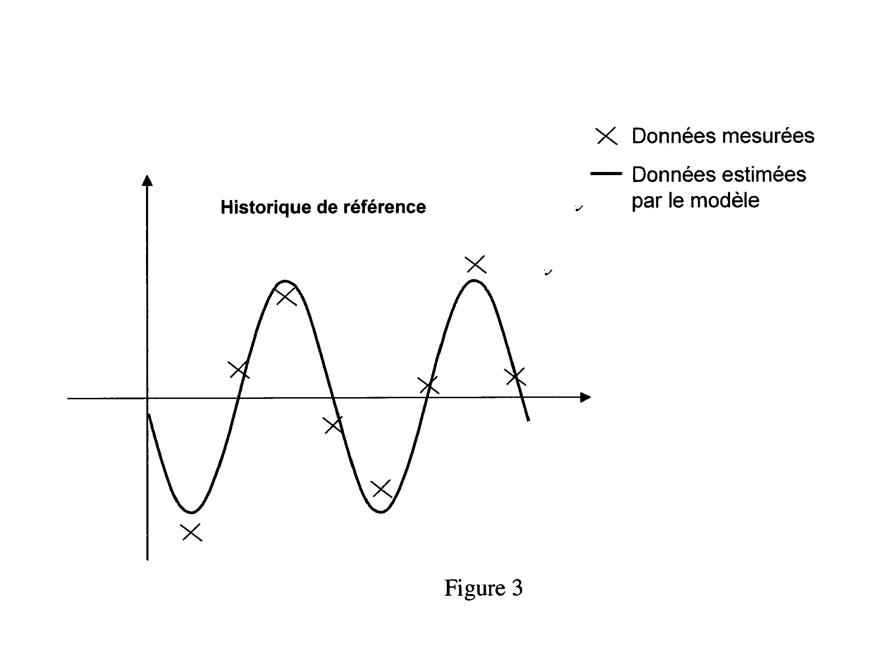

À partir des données recueillies par les sondes, un historique de données peut être constitué. Le modèle permet de fournir une représentation simplifiée de la réalité mesurée par les sondes. Différents types de modèles peuvent être utilisés par l'homme du métier : moyenne mobile, régression linéaire, série chronologique, etc. Selon la complexité du modèle choisi, différents phénomènes peuvent être pris en compte tels que la tendance ou la saisonnalité. L'ajustement du modèle consiste à déterminer les valeurs des paramètres qui minimisent l'écart entre les valeurs estimées par le modèle $y_i^*$ et les

valeurs mesurées $y_i$. Ceci est illustré figure 3.

## Phase 2 : Construction d'un intervalle de confiance

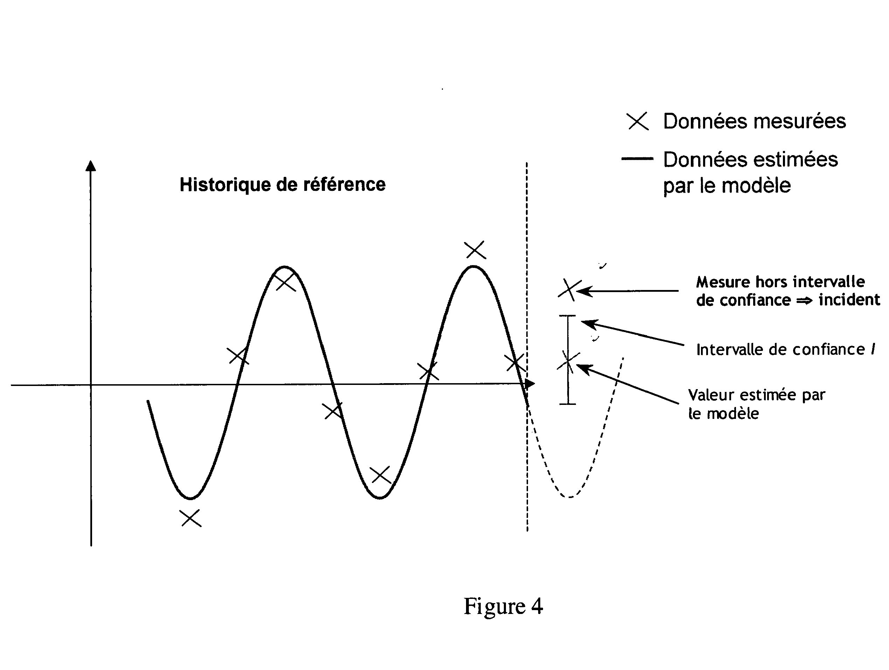

Une fois les paramètres du modèle ajustés, il est possible de caractériser, par une distribution statistique, l'écart du modèle par rapport à la réalité *(y\*-y)*. En général, une loi normale centrée est utilisée. Ceci permet de construire un intervalle de confiance et d'apporter une information supplémentaire pour la détection d'incident. En effet, le modèle permet d'estimer la mesure que l'on obtiendrait en moyenne. L'intervalle de confiance quant à lui permet de définir un domaine au-delà duquel toute valeur observée peut être considérée comme correspondant à un incident. L'intervalle de confiance est construit en fonction d'une probabilité d'erreur appelée seuil de confiance. Ceci est illustré figure 4. $y^*$ correspond à l'estimation du modèle. I est un intervalle de confiance défini pour un seuil de confiance de 5%, par exemple. On pourra alors considérer que toute mesure se trouvant à l'extérieur de l'intervalle I correspond à un incident. La probabilité de se tromper dans ce cas est 5%.

## Phase 3 : Détection

Une mesure est considérée comme correspondant à un incident si elle se trouve à l'extérieur de l'intervalle de confiance. À ce niveau, deux types d'erreurs peuvent survenir :

**Erreur de 1$^{er}$ type :** cette erreur correspond au cas où un incident est détecté alors que la mesure est normale. Comme cela est mentionné plus haut, la probabilité de commettre cette erreur est donnée par le seuil de confiance.

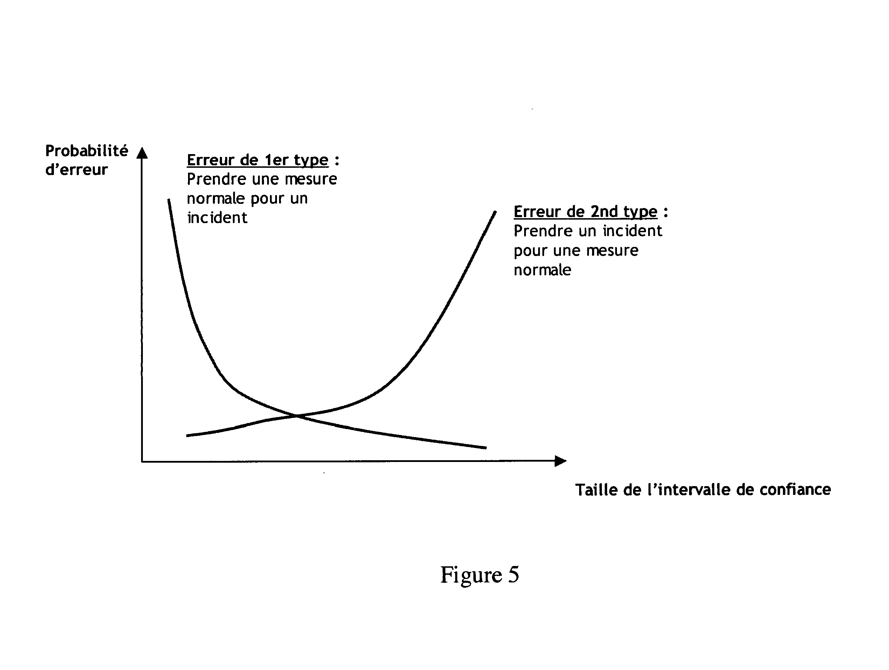

**Erreur de 2$^{nd}$ type :** cette erreur consiste à considérer comme normale une mesure correspondant à un incident. L'évaluation de la probabilité d'occurrence de cette erreur n'est pas triviale. En effet, les chances de commettre une erreur de 2$^{nd}$ type sont d'autant plus réduites que le modèle est précis. Cette probabilité augmente également avec la taille de l'intervalle de confiance, comme cela est illustré figure 5.

## Phase 4 : Filtrage et Tri

En fonction du seuil de confiance choisi et de la précision du modèle, le nombre d'incidents détectés par le modèle peut être plus ou moins élevé. Il est donc nécessaire de les filtrer et de les hiérarchiser par ordre d'importance. Pour ce faire, deux critères peuvent être utilisés :

**Anormalité de l'incident :** ce critère permet de qualifier le caractère exceptionnel de l'incident. Il peut

être évalué par $\dfrac{y_i^* - y_i}{\sigma}$ où $\sigma$ est l'écart type de $y_i^*$ - $y_i$ estimé sur l'historique.

**Sévérité de l'incident :** ce critère permet de qualifier l'impact (par exemple financier) de l'incident. Si, par exemple, la mesure correspond à un volume d'appels, l'impact peut être évalué par l'écart absolu entre la valeur mesurée et celle estimée par le modèle *(y_i\*- y_i)*.

À partir de ces deux critères, des seuils d'alerte et des clés de tri peuvent être définis. Les alertes les plus pertinentes peuvent être ainsi remontées, via l'interface logicielle, au superviseur du réseau.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de supervision d'un réseau de télécommunications ayant pour but la détection d'événements à partir d'équipements-sondes placés dans le réseau comprenant les étapes consistant à :

   • spécifier un modèle ajusté sur un historique de données ;
   • calibrer ledit modèle en mesurant les écarts entre le modèle et les données de l'historique ;
   • construire un intervalle de confiance ;
   • recueillir des données Dr ;
   • appliquer ledit modèle auxdites données Dr ;
   • détecter des incidents en observant les écarts entre les valeurs de Dr et l'estimation donnée par ledit modèle et en évaluant si les écarts appartiennent ou non audit intervalle de confiance ; et
   • filtrer et trier lesdits incidents détectés, en utilisant un indice d'anormalité et de sévérité.

2. Procédé de supervision d'un réseau de télécommunications selon la revendication 1, **caractérisé en ce que** lesdites données Dr représentent un nombre d'appels vers une destination donnée ou depuis une origine donnée en un temps donné.

3. Procédé de supervision d'un réseau de télécommunications selon la revendication 1, **caractérisé en ce que** lesdites données Dr représentent des volumes d'appels.

4. Procédé de supervision d'un réseau de télécommunications selon la revendication 1, **caractérisé en ce que** lesdites données Dr représentent des erreurs.

5. Procédé de supervision d'un réseau de télécommunications selon la revendication 1, **caractérisé en ce que** lesdites données Dr représentent des proportions d'appels réussis.

6. Procédé de supervision d'un réseau de télécommunications selon la revendication 1, **caractérisé en ce que** lesdites données Dr représentent des nombres de tentatives d'appels.

7. Procédé de supervision d'un réseau de télécommunications selon l'une au moins des revendications précédentes, **caractérisé en ce que** lesdites données Dr représentent des données relatives à un transporteur donné.

8. Procédé de supervision d'un réseau de télécommunications selon l'une au moins des revendications précédentes, **caractérisé en ce que** lesdites données Dr représentent des durées moyennes d'appels ou des proportions d'appels courts ou longs.

9. Procédé de supervision d'un réseau de télécommunications selon l'une au moins des revendications précédentes, **caractérisé en ce que** lesdites données Dr représentent un indicateur assez régulier dont une variation soudaine peut permettre de mettre en évidence un dysfonctionnement technique.

10. Procédé de supervision d'un réseau de télécommunications selon l'une au moins des revendications précédentes, **caractérisé en ce que** lesdites données Dr sont hiérarchisées, par exemple par pays ou par tranches de numéros.

11. Procédé de supervision d'un réseau de télécommunications selon l'une au moins des revendications précédentes, **caractérisé en ce qu'**il comporte en outre une étape de consultation des incidents par un utilisateur au moyen d'une interface logicielle, notamment graphique.

12. Procédé de supervision d'un réseau de télécommunications selon l'une au moins des revendications précédentes, **caractérisé en ce qu'**il comporte en outre une étape de régulation automatique du réseau.

13. Système de supervision d'un réseau de télécommunications comportant au moins un équipement-sonde et un serveur de traitement pour la mise en oeuvre du procédé selon l'une au moins des revendications précédentes.

TSC : Réseau de commutation

MSC :interfaces avec le système radio

BSC : Contrôleurs de stations de base (BTS)

BTS : stations de base pour l'émission et la réception radio

Figure 1

EP 1 681 800 A1

Figure 2

Figure 3

Légende:
✕ Données mesurées
— Données estimées par le modèle

Historique de référence

× Données mesurées

— Données estimées par le modèle

**Historique de référence**

Mesure hors intervalle de confiance ⇒ incident

Intervalle de confiance *I*

Valeur estimée par le modèle

Figure 4

EP 1 681 800 A1

Figure 5

**Office européen des brevets**

## RAPPORT DE RECHERCHE EUROPEENNE

Numéro de la demande

EP 06 29 0110

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2004/138858 A1 (CARLEY STEPHEN) 15 juillet 2004 (2004-07-15) * page 1, alinéa 1 - page 8, alinéa 84; figures 1,2 * ----- | 1-13 | H04L12/26 H04L12/24 |
| X | EP 1 065 827 A (LUCENT TECHNOLOGIES INC) 3 janvier 2001 (2001-01-03) * page 2, alinéa 9 - page 10, alinéa 42; figures 7,10 * ----- | 1-13 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 27 mars 2006 | García Bolos, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 0110

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2006

| Document brevet cité au rapport de recherche | | Date de publication | Membre(s) de la famille de brevet(s) | | Date de publication |
|---|---|---|---|---|---|
| US 2004138858 | A1 | 15-07-2004 | WO | 03009162 A1 | 30-01-2003 |
| | | | US | 2003018450 A1 | 23-01-2003 |
| EP 1065827 | A | 03-01-2001 | DE | 60000307 D1 | 12-09-2002 |
| | | | DE | 60000307 T2 | 10-04-2003 |
| | | | JP | 2001057555 A | 27-02-2001 |
| | | | US | 6597777 B1 | 22-07-2003 |

Pour tout renseignement concernant cette annexe : voir Journal Officiel de l'Office européen des brevets, No.12/82

EPO FORM P0460